# EUROPÄISCHE PATENTSCHRIFT

(11) **EP 2 981 683 B1**
(45) Veröffentlichungstag und Bekanntmachung des Hinweises auf die Patenterteilung: **11.11.2020**
(21) Anmeldenummer: 14718014.5
(22) Anmeldetag: 01.04.2014
(51) Int. Cl.: F01K 3/12, F01K 13/02

(54) **OPTIMIERUNG VON KALTSTARTS BEI THERMISCHEN KRAFTWERKEN, INSBESONDERE BEI DAMPFTURBINEN- ODER BEI GAS-UND-DAMPFTURBINENKRAFTWERKEN (GUD-KRAFTWERKE)**
OPTIMIZATION OF COLD STARTS IN THERMAL POWER STATIONS, IN PARTICULAR IN STEAM-ELECTRIC POWER PLANTS OR IN COMBINED CYCLE POWER PLANTS (CCPPS)
OPTIMISATION DE DÉMARRAGES À FROID POUR DES CENTRALES THERMIQUES, NOTAMMENT DES CENTRALES À TURBINES À VAPEUR OU À TURBINES À VAPEUR ET À GAZ (CENTRALE À CYCLE COMBINÉ)

(30) Priorität: 04.04.2013 DE 102013205979
(43) Veröffentlichungstag der Anmeldung: 10.02.2016
(73) Patentinhaber: Siemens Aktiengesellschaft, 80333 München (DE)
(72) Erfinder: HACKSTEIN, Holger, 63128 Dietzenbach (DE); WIEBKING, Leif, 76228 Karlsruhe (DE)
(86) Internationale Anmeldenummer: PCT/EP2014/056499
(87) Internationale Veröffentlichungsnummer: WO 2014/161838

(56) Entgegenhaltungen:
- EP-A1- 2 351 912
- EP-A2- 2 348 199
- DE-A1- 4 138 288
- DE-A1-102011 100 517

## Beschreibung

Die Erfindung betrifft ein thermisches Kraftwerk, insbesondere ein Dampfturbinen- oder ein Gas-und-Dampfturbinenkraftwerk (GuD-Kraftwerk), sowie ein Verfahren zum Betreiben eines thermischen Kraftwerks, insbesondere eines Dampfturbinen- oder Gas-und-Dampfturbinenkraftwerks.

Dampfturbinenkraftwerke oder auch kurz nur Dampfkraftwerke sind weithin bekannt, beispielsweise aus http://de.wikipedia.org/wiki/Dampfkraftwerk (erhältlich am 23.03.2013).

Ein Dampfkraftwerk ist eine Bauart eines thermischen Kraftwerks zur Stromerzeugung aus fossilen Brennstoffen, bei der eine thermische Energie - in diesem Fall - von Wasserdampf in einer Dampfturbinenanlage bzw. in einer Dampfturbine in Bewegungsenergie umgesetzt und weiter in einem Generator in elektrische Energie umgewandelt wird.

Bei einem solchen Dampfkraftwerk wird der zum Betrieb der Dampfturbine notwendige Wasserdampf zunächst in einem mittels des fossilen Brennstoffs beheizten Dampfkessel aus in der Regel zuvor gereinigtem und aufbereitetem (Speise-)Wasser erzeugt. Durch weiteres Erwärmen des Dampfes in einem Überhitzer nehmen Temperatur und spezifisches Volumen des Dampfes zu.

Vom Dampfkessel aus strömt der Dampf über Rohrleitungen in die Dampfturbine, wo er einen Teil seiner zuvor aufgenommenen Energie als Bewegungsenergie an die Turbine abgibt. An die Turbine ist ein Generator angekoppelt, der mechanische Leistung in elektrische Leistung umwandelt.

Danach strömt der entspannte und abgekühlte Dampf in den Kondensator, wo er durch Wärmeübertragung an die Umgebung kondensiert und sich als flüssiges Wasser sammelt.

Über Kondensatpumpen und Vorwärmer hindurch wird das Wasser in einem Speisewasserbehälter zwischengespeichert und dann über eine Speisepumpe erneut dem Dampfkessel zugeführt, womit ein Kreislauf geschlossen wird ("originärer Kraftwerksprozess") .

Man unterscheidet - in Abhängigkeit des zur Dampferzeugung verwendeten Brennstoffs - verschiedene Dampfkraftwerksarten, wie beispielsweise Kohlekraftwerke oder Ölkraftwerke.

Weiterhin sind andere Kategorien von thermischen Kraftwerken bekannt, wie beispielweise Gasturbinenkraftwerke (kurz auch Gaskraftwerke) oder - als Kombination von Gas- und Dampfkraftwerken - sogenannte Gas-und-Dampf-Kombikraftwerke bzw. Gas-und-Dampfturbinen-Kraftwerke (kurz auch GuD-Kraftwerke).

Ein Gaskraftwerk ist ein thermisches Kraftwerk mit einer Gasturbinenanlage aus einem Verdichter, einer Brennkammer mit meist mehreren Brennern und einer Gasturbine zur Stromerzeugung.

Ein Gasturbinenkraftwerk wird mit fluiden Brennstoffen betrieben. In der Regel sind diese Brennstoffe Kohlenwasserstoffe, Alkohole, Kohle- oder Erdgas. Diese Fluide sind der Brennstoff für die Gasturbinenanlage, deren Gasturbine einen an sie angekoppelten Generator zur Stromerzeugung antreibt.

Dabei saugt zunächst der ebenfalls an die Gasturbine mechanisch angekoppelte und durch diese angetriebene Verdichter Frischluft für den Verbrennungsprozess an und verdichtet diese auf Werte, die meist im Bereich 15 bar - 20 bar liegen.

Die komprimierte Luft wird mit dem Brennstoff der Brennkammer zugeführt. Dort wird das Gemisch aus Frischluft und Brennstoff mittels des bzw. der Brenner gezündet, um dann dort zu verbrennen, wobei Verbrennungsgase - im Wesentlichen Kohlendioxid, Wasserdampf, Stickstoff und Sauerstoff - Temperaturen bis ca. 1500°C und höher erreichen.

Die heißen Abgase strömen dann in die Gasturbine, in der diese einen Teil ihrer thermischen Energie durch Entspannung als Bewegungsenergie an die Gasturbine abgeben.

Durch den an die Gasturbine gekoppelten Generator wird die mechanische Leistung dann in elektrische Leistung umgewandelt, welche als elektrischer Strom in ein Stromnetz eingespeist wird ("originärer Kraftwerksprozess").

Vom Gasturbinenaustritt werden (kohlendioxidreiche) Abgase bzw. Rauchgase entweder direkt oder mitunter auch über einen Wärmetauscher abgeleitet.

Ein GuD-Kraftwerk ist ein thermisches Kraftwerk, in dem die Prinzipien bzw. Kreisläufe eines Gaskraftwerkes und eines Dampfkraftwerkes kombiniert werden. Die Gasturbine dient dabei - über ihre heißen Abgase - als Wärmequelle für einen nachgeschalteten Abhitzekessel des Dampfkraftwerks, der nach den üblichen Prinzipien des Dampfkraftwerks wiederum als Dampferzeuger für die Dampfturbine wirkt.

Weiterhin ist bekannt, dass mittels einer sogenannten Leittechnik - als zu einem Kraftwerk zugehörigen Bestandteil - ein thermisches Kraftwerk - meist durch einen Leitstandsfahrer von einer Leitwarte aus - "gefahren" wird. D.h., unter einer Leittechnik eines Kraftwerks, hier eines thermischen Kraftwerks, versteht man üblicherweise Mittel und Verfahren, die einem Steuern, Regeln und Sichern des Kraftwerks dienen.

So werden beispielsweise im Rahmen der Leittechnik sämtliche in einem - hier thermischen - Kraftwerk anfallenden Informationen, wie beispielsweise Messwerte, Prozess- oder Zustandsdaten, in der Leitwarte angezeigt und dort in einem leittechnischen Zentralrechner - als die zentrale Kontroll-/Steuer-/Regeleinheit des Kraftwerks - nach einem zentralen Kontroll-/Steuer-/Regelplan verarbeitet. Betriebszustände einzelner Kraftwerkskomponenten werden so dort angezeigt, ausgewertet, kontrolliert, gesteuert und/oder geregelt. Über Steuerorgane kann dort von dem Leitstandsfahrer (Operateur) in den Betriebsablauf des Kraftwerks eingegriffen - und dadurch das Kraftwerk gefahren - werden.

Im Rahmen eines zunehmenden Anteils von volatiler Energie, beispielsweise aus erneuerbaren, regenerativen Energien, wie insbesondere Sonnen- oder Windenergie, erzeugt von beispielsweise Photovoltaikanlagen/-kraftwerken, Solarkraftwerken oder Windkraftanlagen, an einem Energiemix in einem Energieverteilungsnetz, kommt den Energie in das Energieverteilungsnetz einspeisenden, konventionellen, thermischen Kraftwerken immer mehr die Aufgabe zu, das Energieverteilungsnetz durch Regelenergie zu stützen und als "Backup" in Form von Kapazität und Regelenergie für die erneuerbaren, volatilen Energien bzw. deren entsprechenden Kraftwerken zu dienen.

Im Rahmen dieser Aufgabe kann die reine Energieerzeugung bei den konventionellen, thermischen Kraftwerken derart in den Hintergrund treten, dass diese nach einem Abfahren lange nicht gefordert werden (Stillstand) - und abkühlen, so dass sie beim (Wieder-)Hochfahren in ihren Betriebszustand statt eines Warmstarts (beispielsweise bei Stillstand ca. 8 Stunden bis 56 Stunden) einen Kaltstart (beispielsweise bei Stillstand größer ca. 56 Stunden) machen müssen.

Bauformbedingt bei konventionellen, thermischen Kraftwerken kann eine solche Kaltstartphase zwischen 2 und 8 Stunden, unter Umständen aber auch bis zu 10 Stunden, liegen.

In dieser (Hochfahr-/Kaltstart-)Phase kann aber das thermische Kraftwerk keine "eigene" Energie liefern bzw. vermarkten, sondern muss, beispielsweise wegen Eigenbedarf an Energie beim/zum Vorwärmen, Energie zukaufen.

Darüber hinaus sind thermische Kraftwerke auf sich rasch wiederholendes Abstellen und Wiederhochfahren nicht ausgelegt bzw. vorbereitet, belastet auch ein Kaltanfahren ein Kraftwerk aufs Höchste, was bei einem Kaltstart bis zu 30 Stunden Gesamtlebensdauerverlust eines thermischen Kraftwerks bedeuten kann.

Demzufolge ist es wünschenswert, das Hochfahren bzw. eine solche Kaltstartphase bei einem thermischen Kraftwerk möglichst kurz und/oder wenig belastend für Anlagen bzw. Kraftwerkskomponenten zu halten bzw. zu gestalten.

Hier ist es bekannt, durch ein gezieltes Vorwärmen von Kraftwerkskomponenten, insbesondere einer Turbinenanlage eines Kraftwerks, das Hochfahren bzw. eine solche Kaltstartphase bei einem thermischen Kraftwerk zu verkürzen, lässt sich dadurch das thermische Kraftwerk bzw. seine Komponenten schneller auf Betriebstemperatur bringen.

Zu einer solchen Vorwärmung eines thermischen Kraftwerks, insbesondere seiner Komponenten, im Speziellen seiner Turbine oder Turbinenanlage, kann Energie dem Energieverteilungsnetz entnommen werden.

Mittels dieser (Fremd-)Energie kann ein Hilfsdampferzeuger des thermischen Kraftwerks erhitzt werden, welcher Dampf in hoher Güte erzeugt. Dieser Dampf wird der Turbine/-nanlage des thermischen Kraftwerks zugeleitet, durchströmt die Turbine/-nanlage, wodurch diese (vor-/durch-)erwärmt wird.

Ist eine ausreichende Erwärmung der Turbine/-nanlage erreicht, kann die Turbine/-nanlage angestoßen und dann langsam (auf einen Betriebspunkt des thermischen Kraftwerks bzw. auf Volllast) hochgezogen werden.

Andere vorzuerwärmende bzw. vorerwärmbare Komponenten bei einem thermischen Kraftwerk sind (Dampf-)Kessel bzw. (Dampf-) Kesselgehäuse oder Welle.

Zeitbestimmend sind dabei die dickwandigsten, vorzuerwärmenden Komponenten bei dem thermischen Kraftwerk, beispielsweise die Welle und das Hochdruckdampfgehäuse bei einem Dampfkraftwerk bzw. bei dortiger Dampfturbinenanlage, da diese Kraftwerkskomponenten am längsten zum Durchwärmen brauchen.

Ein modernes GuD-Kraftwerk benötigt so beispielsweise ca. 4 Stunden für einen Kaltstart.

Weiterhin ist - zur Verkürzung von Kaltstartphasen bzw. Hochfahrzeiten bei thermischen Kraftwerken, hier GuD-Kraftwerken - ein sogenanntes "Advanced Facy" oder auch "hot on the fly" ("fliegender Start") bekannt ("Improvement of operational efficiency based on fast startup plant concepts", Ulrich Grumann et al., Siemens AG Energy Solutions, XXIst World Energy Congress, Montreal, September 12-16, 2010).

Beim "Advanced Facy" bzw. beim "fliegenden Start" wird die Dampfturbine des GuD-Kraftwerks annähernd parallel mit der die Dampfturbine mit Abhitze heizenden Gasturbine hochgefahren, wodurch die Dampfturbine sofort und extrem, aber noch unterhalb deren Belastungsgrenze bzw. einzuhaltenden maximalen Erwärmungstemperaturgradienten, mit heißem Dampf beaufschlagt - und damit schnell auf "Temperatur gebracht wird". Anfahrzeiten bei GuD-Kraftwerken lassen sich hierdurch deutlich reduzieren.

Nachteilig beim "Advanced Facy" bzw. beim "fliegenden Start" ist, dass zu dessen Realisierung bei bestehenden thermischen Kraftwerken dort eine entsprechende, aufwändige (Nach-) Installation (von kraftwerkstechnischer Hard- und Software) erforderlich ist.

Ebenfalls von Nachteil ist beim "Advanced Facy" bzw. beim "fliegenden Start", dass dazu - bei so entstehenden zusätzlichen Kosten - primäre Energie einzusetzen ist. D.h., es wird zum Beispiel Gas in der Gasturbine verbrannt, mit dem der Dampfteil erwärmt wird.

Andere Ansätze bei thermischen Kraftwerken, um dort der beschriebenen Kaltstartproblematik zu begegnen, sind ein (dauerhaftes) Heißhalten von Kraftwerkskomponenten, ein Durchfahren des thermischen Kraftwerks auf Volllast oder ein Absenken des Kraftwerks auf nur Teillast. Diese Ansätze bergen aber ökonomische, ökologische und/oder technische Nachteile und Risiken in sich.

Aus http://de.wikipedia.org/wiki/Energiespeicher (erhältlich am 03.04.2013) ist eine Einteilung von Energiespeichern mit entsprechenden Beispielen und Eigenschaften von solchen Energiespeichern bekannt.

Danach können Energiespeicher in thermische Energiespeicher (Wärmespeicher, Fernwärmespeicher, thermochemische Wärmespeicher, Latentwärmespeicher), in chemische Energiespeicher (anorganisch: galvanische Zelle (Akkumulator, Batterie), Redox-Flow-Zelle, Wasserstoff, Batterie-Speicherkraftwerk; organisch: ADP, ATP, AMP, Glykogen, Kohlenhydrate, Fette, chemische Wasserstoffspeicher), in mechanische Energiespeicher (kinetische Energie (Bewegungsenergie): Schwungrad bzw. Schwungradspeicher; potentielle Energie (Lageenergie): Feder, Pumpspeicherkraftwerk, Druckluftspeicherkraftwerk, Hubspeicherkraftwerk) und in elektrische Energiespeicher (Kondensator, supraleitender magnetischer Energiespeicher) eingeteilt werden.

Die EP 2 351 912 A1 offenbart ein thermisches Kraftwerk mit einem Wärmespeicher, welcher eingerichtet ist, um bei einem Hochfahren des thermischen Kraftwerks (Wärme-)Energie zu einem Erwärmen von einer Turbine des thermischen Kraftwerks zu liefern.

Die DE 10 2010 041 144 A1 beschreibt ein thermisches Kraftwerk mit einem Druckspeicher. Dieser Druckspeicher - mit dortigem unter Druck stehendem Fluid - ist eingerichtet, um bei einem Hochfahren des thermischen Kraftwerks Energie - in Form bzw. durch Einspeisung des komprimierten Fluids aus dem Druckspeicher in eine Arbeitsmaschine, welche Rotationsenergie für eine Turbine des thermische Kraftwerks erzeugt und so diese antreibt - für den Betrieb der Turbine bei dessen Start/Hochfahren zu liefern.

Die DE 41 38 288 A1 offenbart ein thermisches Kraftwerk mit einem elektrischen Energiespeicher, welcher eingerichtet ist, um im Betrieb des Kraftwerks elektrische Energie zum kurzzeitigen Ausregeln von Lastspitzen in ein Energieverteilungsnetz zu liefern.

Der Erfindung liegt die Aufgabe zugrunde, ein thermisches Kraftwerk sowie ein Verfahren zum Betrieb eines thermischen Kraftwerks zur Verfügung zu stellen, welche es ermöglichen, den, insbesondere ökonomischen, ökologischen und/oder technischen, Anforderungen moderner Energieverteilung, insbesondere mit dortiger schwankenden Energieproduktion, gerecht zu werden.

Die Aufgabe wird durch ein thermisches Kraftwerk sowie durch ein Verfahren zum Betrieb eines thermischen Kraftwerks gemäß dem jeweiligen unabhängigen Anspruch gelöst.

Das erfindungsgemäße thermische Kraftwerk weist einen kraftwerksimmanenten thermischen Energiespeicher auf, welcher eingerichtet ist, um bei einem Hochfahren des thermischen Kraftwerks Energie zu einem Erwärmen von Komponenten und/oder Medien des thermischen Kraftwerks zu liefernund einen zusätzlichen, kraftwerksimmanenten elektrischen, chemischen oder mechanischen Energiespeicher, welcher eingerichtet ist, um bei einem Hochfahren des thermischen Kraftwerks Energie zur Einspeisung in ein elektrisches Energieverteilungsnetz zu liefern.

Bei dem erfindungsgemäßen Verfahren zum Betrieb eines thermischen Kraftwerks liefert bei einem Hochfahren des thermischen Kraftwerks ein kraftwerksimmanenter, zusätzlicher Energiespeicher des thermischen Kraftwerks Energie, welche bei dem Hochfahren des thermischen Kraftwerks in ein elektrisches Energieverteilungsnetz, insbesondere als positive Regelenergie, einspeist wird oder mit welcher Komponenten und/oder Medien des thermischen Kraftwerks, insbesondere eine Turbine, ein Kessel und/oder ein Prozessgas-/dampf des thermischen Kraftwerks, bei dem Hochfahren des thermischen Kraftwerks erwärmt, insbesondere vorerwärmt, werden.

Dabei meint die Erfindung unter einem zusätzlichen, kraftwerksimmanenten Energiespeicher einen Energiespeicher, welcher für die originäre Energieerzeugung des thermischen Kraftwerks nicht benötigt wird ("zusätzlich"), doch im Falle der Erfindung - als solcher zusätzlicher Energiespeicher - unmittelbar funktionell in das thermische Kraftwerk integriert ist ("kraftwerksimmanent").

Dies bzw. diese "Kraftwerks-Immanenz" kann dadurch Ausdruck finden, dass ein solcher erfindungsgemäßer kraftwerksimmanenter Energiespeicher Teil der Leittechnik des thermischen Kraftwerks bzw. in die Leittechnik des thermischen Kraftwerks integriert und über diese - als Teil des erfindungsgemäßen thermischen Kraftwerks - steuer-/regel-/fahrbar ist und/oder dass ein solcher erfindungsgemäßer kraftwerksimmanenter Energiespeicher räumlich/örtlich in das erfindungsgemäße thermische Kraftwerk integriert ist - und so unmittelbar, insbesondere "Hard- (zum Beispiel durch Verrohrung) und Software" technisch, zu dessen Anlagen-/Kraftwerksteil geworden ist.

Anschaulich und vereinfacht ausgedrückt, die Erfindung "erweitert" anlagentechnisch wie auch funktionell ein herkömmliches bzw. konventionelles thermisches Kraftwerk um einen zusätzlichen Energiespeicher, zum Beispiel in Form eines thermischen, elektrischen, chemischen oder mechanischen Energiespeichers, welchen sie als Energielieferant derart in das thermische Kraftwerk integriert, dass dieser Energiespeicher beim Hochfahren des thermischen Kraftwerks Energie (nach Art entsprechend des jeweils verwendeten Energiespeichers) liefert.

Diese durch den zusätzlichen, kraftwerksimmanenten Energiespeicher zur Verfügung gestellte Energie verwendet dann das thermische Kraftwerk entweder dazu, Komponenten, wie die Turbine und/oder den Kessel, oder (Arbeits-/Prozess-)Medien, wie das Prozessgas/-dampf, des thermischen Kraftwerks, insbesondere direkt (zum Beispiel durch ein Einblasen) oder indirekt (beispielsweise über einen Wärmetauscher), zu erwärmen bzw. vorzuerwärmen oder - anstelle von originär vom thermischen Kraftwerk erzeugter und in ein Energieverteilungsnetz eingespeister/einzuspeisender Energie in das elektrische Energieverteilungsnetz einzuspeisen.

Damit ermöglicht die Erfindung mit Nutzung dieses erfindungsgemäßen zusätzlichen, kraftwerksimmanenten Energiespeichers bzw. der durch ihn beim Hochfahren des thermischen Kraftwerks zur Verfügung gestellten Energie, Hochfahr-/Kaltstartphasen bzw. -zeiten bei thermischen Kraftwerken zu verkürzen und/oder auch sonstig bei dem thermischen Kraftwerk aufzubringende Energie (ein-) zu sparen (beispielsweise für einen Betrieb einer Gasflamme zur Brennerluftvorwärmung) - und so - technisch, ökonomisch wie auch ökologisch - zu optimieren. Die Kraftwerkskomponenten und/oder Medien können so bei ihrer durch den erfindungsgemäßen Energiespeicher bewirkten Erwärmung schneller - und/oder energiesparend - auf "Temperatur" gebracht werden. Der erfindungsgemäße Energiespeicher "entlastet" durch seine (anstelle der originären Energieeinspeisung durch das Kraftwerk) Energieeinspeisung das thermische Kraftwerk, wobei so mehr (kraftwerksoriginäre) Energie fürs Hochfahren zur Verfügung steht. Der erfindungsgemäße Energiespeicher sorgt somit durch seine Energieeinspeisung während des Hochfahrens für ökonomischen Benefit in einer Phase, in welcher sonst ein herkömmliches Kraftwerk keine Energie vermarkten kann.

Weiter vorteilhaft bei diesem erfindungsgemäßen Energiespeicher ist, dass dieser in Zeiten günstiger Energie/günstigen Stroms, wie beispielsweise bei einem Überangebot von erneuerbarer Energie beim/im elektrischen Energieverteilungsnetz, gefüllt/geladen werden - und so "später" die Verkürzung der Kaltstartphase bei dem thermischen Kraftwerk und dessen schnellere Anfahrt ermöglichen kann und/oder auch - ökonomisch vorteilhaft - unmittelbar vermarktet werden kann. Weiter - ökonomisch - vorteilhaft ist hier, dass die Energie zum Füllen/Laden des erfindungsgemäßen Energiespeichers als Eigenbedarf deklariert werden kann bzw. gilt, weshalb sie durch das Erneuerbare-Energie-Gesetz (EEG) von Zulagen ausgenommen ist.

Als Energiespeicher kann die Erfindung bei dem thermischen Kraftwerk einen thermischen, elektrischen, chemischen oder mechanischen Energiespeicher - oder auch eine beliebige Kombination mehrerer dieser Energiespeicher - vorsehen.

Danach können thermische Energiespeicher, wie Wärmespeicher, Fernwärmespeicher, thermochemische Wärmespeicher, Latentwärmespeicher, Tanks oder (elektrische) Kessel, chemische Energiespeicher, wie galvanische Zellen, Akkumulatoren, Batterien, Redox-Flow-Zellen, Wasserstoffe, Batterie-Speicherkraftwerke, ADP, ATP, AMP, Glykogen, Kohlenhydrate, Fette und/oder chemische Wasserstoffspeicher, mechanische Energiespeicher, wie Schwungräder bzw. Schwungradspeicher, Federn, Pumpspeicherkraftwerke, Druckluftspeicherkraftwerke und/oder Hubspeicherkraftwerke, und/oder elektrische Energiespeicher, wie Kondensatoren und/oder supraleitende magnetische Energiespeicher, verwendet werden.

Dieser erfindungsgemäße Energiespeicher kann bzw. diese erfindungsgemäße Energiespeicher können so dann auch Teil einer Leittechnik des thermischen Kraftwerks bzw. in die Leittechnik des thermischen Kraftwerks integriert sein und über diese - als Teil des erfindungsgemäßen thermischen Kraftwerks - gesteuert/geregelt bzw. gefahren werden.

Auch kann dieser erfindungsgemäße Energiespeicher bzw. können diese erfindungsgemäßen Energiespeicher räumlich/örtlich in das erfindungsgemäße thermische Kraftwerk integriert sein - und so unmittelbar zu dessen Anlagen-/Kraftwerksteil werden.

Wird eine Kombination von - beispielsweise zwei - Energiespeichern vorgesehen, so kann mittels der Energie des einen Energiespeichers der andere Energiespeicher betrieben werden. Beispielsweise ist es so möglich, mittels eines elektrischen oder chemischen Energiespeichers, wie einem Akkumulator, einen thermischen Energiespeicher, wie einen elektrischen Kessel, zu betreiben. Der thermische Energiespeicher kann dann - in der Hochfahrphase/Kaltstartphase - die Energie fürs Erwärmen bzw. Einspeisen liefern. In Zeiten günstiger Energie/Strom kann der elektrische/chemische Energiespeicher geladen werden.

Auch können bei Verwendung mehrerer erfindungsgemäßer Energiespeicher sowohl das erfindungsgemäße Erwärmen als auch die erfindungsgemäße Einspeisung beim Hochfahren des thermischen Kraftwerks vorgesehen sein/werden. So kann beispielsweise ein thermischer Energiespeicher für die Erwärmung der Komponenten/Medien des thermischen Kraftwerks beim Hochfahren des thermischen Kraftwerks eingesetzt - und - ein elektrischer oder chemischer oder mechanischer Energiespeicher für die Einspeisung von elektrischer Energie in das Energieverteilungsnetz beim Hochfahren des thermischen Kraftwerks verwendet werden.

Anders ausgedrückt kann das thermische Kraftwerk mehrere von den Energiespeichern vorsehen, insbesondere einen thermischen Energiespeicher, welcher eingerichtet ist, um bei dem Hochfahren des thermischen Kraftwerks die Energie zum Erwärmen von den Komponenten/Medien des thermischen Kraftwerks zu liefern, und einen elektrischen oder chemischen oder mechanischen Energiespeicher, welcher eingerichtet ist, um bei dem Hochfahren des thermischen Kraftwerks die Energie zu der Einspeisung in das elektrische Energieverteilungsnetz zu liefern.

Als thermischer Energiespeicher kann bevorzugt ein Tank, insbesondere ein Drucktank, beispielsweise ein Öltank o.ä., verwendet werden. Solche Tanks sind kostengünstig erhältlich bzw. einsetzbar. Auch kann der thermische Energiespeicher ein Kessel, insbesondere ein Dampf-, Elektroden- oder Heizkessel, insbesondere auch ein elektrischer Kessel, sein.

Die thermische Energie eines solchen thermischen Energiespeichers kann dann so zur Er-/Vorerwärmung verwendet werden, auch kann sie so der Erhöhung des Energieniveaus, beispielsweise wie im Fall einer Zwischenüberhitzung von Prozessdampf zwischen einem Hoch- und Mittel- bzw. zwischen dem Mittel- und einem Niederdruckteil einer mehrteiligen Dampfturbine, - ohne das "originäre" Kraftwerk hier verwenden zu müssen - dienen.

Die Erwärmung bzw. Vorerwärmung kann dabei unmittelbar durch Ein-/Anblasen von Komponenten mit der thermischen Energie, d.h. heißem Dampf/Gas, erfolgen, wie auch indirekt durch einen Wärmetauscher, welcher dann die thermische Energie auf ein anderes Medium, wie den/das Prozessdampf/-gas und/oder die Brennerluft, überträgt.

Weiter ist es hier von Vorteil, diesen thermischen Energiespeicher, wie einen solchen Tank oder Kessel, mit Prozessgas/-dampf des thermischen Kraftwerks in dessen Betriebszeit zu füllen. So kann beispielsweise Prozessdampf an einer Dampfturbine, insbesondere an/nach einem Hochdruckteil einer mehrteiligen Dampfturbine, angezapft werden (Regelanzapfung) und über diesen der thermische Energiespeicher bzw. der Tank/Kessel gefüllt werden.
Auch ist es hier möglich zur Beladung/Befüllung des thermischen Energiespeichers bzw. Tanks, einen zusätzlichen elektrischen Kessel vorzusehen, welcher dann - neben seiner Möglichkeit, die thermische Energie bzw. Dampf für eine spätere Vorwärmung zu erzeugen und/oder zu speichern und/oder den thermischen Energiespeicher bzw. Tank zu befüllen/laden, - auch noch negative Regelenergie anbieten kann.

Das Anbieten von negativer Regelenergie und/oder das Erzeugen/Speichern von thermischer Energie bzw. das Befüllen/Beladen des thermischen Energiespeichers kann so auch außerhalb des Betriebs des thermischen Kraftwerks erfolgen.

Werden "drucklose" thermische Energiespeicher, wie "einfache" Tanks auf/bei Atmosphärendruck, verwendet, so kann dort thermische Energie - in Form von Wärme - bis zu ca. 98°C - in hoher Qualität - gespeichert werden.

Soll "höher energetische thermische Energie", d.h. Dampf mit höheren Temperaturen, gespeichert werden, so können Drucktanks/-kessel oder elektrische Kessel mit integrierten Druckspeichern verwendet werden.

Von besonderem Vorteil bei elektrischen Kesseln (auch in Kombination mit Tanks) ist überdies, dass deren Energie aus günstigem Strom mit teilweise "negativem" Preis erzeugt werden kann. Damit geht einher, dass der Wirkungsgrad des thermischen Kraftwerks weder beim (Ein-)Speichern der thermischen Energie in den elektrischen Kessel (oder Tank) noch bei einer herkömmlichen Anfahrt bzw. beim Hochfahren des thermischen Kraftwerks gemindert wird, was so auch Kostenvorteile ermöglicht.

Ein elektrischer oder chemischer Energiespeicher kann ein Kondensator oder ein Akkumulator sein.

Auch hier kann es zweckmäßig sein, diesen Energiespeicher in Zeiten günstiger Energie/günstigen Stroms, wie beispielsweise bei einem Überangebot von erneuerbarer Energie beim/im elektrischen Energieverteilungsnetz, zu füllen/laden.

Mittels eines solchen elektrischen bzw. chemischen Energiespeichers kann so auch sowohl positive (beim Einspeisen) als auch negative (beim Laden/Befüllen) Regelenergie angeboten werden.

Bei einem gefüllten/geladenen Energiespeicher ist es dann auch möglich, das thermische Kraftwerk aus einem Schwarzstart anzufahren und - entsprechend seiner Speichergröße - direkt am elektrischen Energieverteilungsnetz zu sein, während das thermische Kraftwerk noch hochgefahren wird.

Ebenso ist es möglich unter Verwendung der durch einen solchen elektrischen bzw. chemischen Energiespeicher zur Verfügung gestellten Energie einen thermischen Energiespeicher, beispielsweise einen (elektrischen) Kessel zu betreiben.

Insbesondere ist so bei einem elektrischen bzw. chemischen Energiespeicher von Vorteil, dass ein Füllen/Laden eines solchen Energiespeichers einen Wirkungsgrad des thermischen Kraftwerks nicht - wie sonst bei den bisher verwendeten Formen einer Anfahroptimierung von thermischen Kraftwerken - negativ verändert.

Das erfindungsgemäße thermische Kraftwerk ist insbesondere geeignet zur Durchführung des erfindungsgemäßen Verfahrens oder einer der erläuterten Weiterbildungen, wie auch das erfindungsgemäße Verfahren zum Betrieb des thermischen Kraftwerks insbesondere geeignet ist, auf dem erfindungsgemäßen Gasturbinenkraftwerk oder einer seiner erläuterten Weiterbildungen durchgeführt zu werden.

Bevorzugte Weiterbildungen der Erfindung ergeben sich auch aus den abhängigen Ansprüchen und/oder aus nachfolgenden Erläuterungen. Die beschriebenen Weiterbildungen beziehen sich sowohl auf das erfindungsgemäße thermische Kraftwerk als auch auf das erfindungsgemäße Verfahren zum Betreiben eines thermischen Kraftwerks.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die Erfindung sowie deren Ausgestaltung und Vorteile werden nachfolgend anhand von Ausführungsbeispielen unter Bezugnahme auf die Figuren näher erläutert.

Gleiche bzw. funktionsgleiche Bauteile weisen in den Figuren gleiche Bezugszeichen auf.

Es zeigen
- FIG 1: schematisch einen Ausschnitt eines Gas-und-Dampf-Kombikraftwerks mit einem kraftwerksimmanenten thermischen Speicher (Tank) zur Optimierung von Kaltstarts gemäß einem Ausführungsbeispiel der Erfindung,
- FIG 2: schematisch einen Ausschnitt eines Gas-und-Dampf-Kombikraftwerks mit einem kraftwerksimmanenten thermischen Speicher (Tank) sowie mit einem kraftwerksinternen elektrischen Speicher (Akku) zur Optimierung von Kaltstarts gemäß einem Ausführungsbeispiel der Erfindung und
- FIG 3: schematisch einen Ausschnitt eines Gas-und-Dampf-Kombikraftwerks mit einem kraftwerksimmanenten thermischen Speicher (elektrischer Kessel) zur Optimierung von Kaltstarts gemäß einem Ausführungsbeispiel der Erfindung.

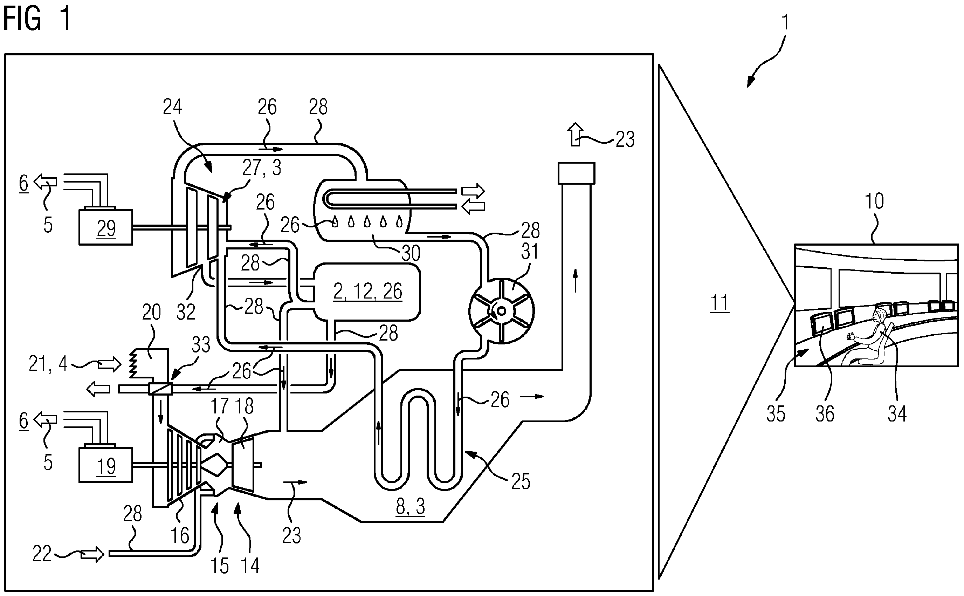

Fig. 1 zeigt schematisch ein Gas-und-Dampf-Kombikraftwerk 1, kurz GuD-Kraftwerk 1.

Der Gasturbinenteil 14 des GuD-Kraftwerks 1 weist eine Gasturbinenanlage 15 aus einem Verdichter 16, einer mit fluiden Brennstoffen beheizten Brennkammer 17 mit mehreren Brennern (nicht dargestellt) und einer Gasturbine 18 auf. Ferner ist ein an die Gasturbine 18 angekoppelter und durch diese angetriebener Generator 19 zur Stromerzeugung vorhanden.

Dabei saugt - über eine Zuführung 20 - zunächst der ebenfalls an die Gasturbine 18 mechanisch angekoppelte und durch diese angetriebene Verdichter 16 über eine Brenngas betriebene Vorwärmung (nicht gezeigt) erwärmte Frisch- bzw. Brennerluft 21 für den Verbrennungsprozess an und verdichtet diese auf Werte, die meist im Bereich 15 bar - 20 bar liegen.

Die komprimierte (Brenner-)Luft 21 wird mit dem Brennstoff 22 der Brennkammer 17 zugeführt. Dort wird das Gemisch aus Frischluft 21 und Brennstoff 22 mittels des bzw. der Brenner gezündet, um dann dort zu verbrennen, wobei Verbrennungsgase - im Wesentlichen Kohlendioxid, Wasserdampf, Stickstoff und Sauerstoff - Temperaturen bis ca. 1500°C und höher erreichen.

Die heißen Abgase 23 strömen dann in die Gasturbine 18, in der sie einen Teil ihrer thermischen Energie durch Entspannung als Bewegungsenergie an die Gasturbine 18 abgeben.

Durch den an die Gasturbine 18 gekoppelten Generator 19 wird die mechanische Leistung dann in elektrische Leistung umgewandelt, welche als elektrischer Strom in das elektrische Energieverteilungsnetz (Stromnetz) 6 eingespeist 5 wird.

Vom Gasturbinenaustritt werden die heißen (kohlendioxidreiche) Abgase bzw. Rauchgase 23 über einen - mit dem Dampfturbinenteil 24 des GuD-Kraftwerks 1 gemeinsamen - Abhitzekessel 8 abgeleitet.

In dem Abhitzekessel 8 erfolgt - über einen Wärmetauscher 25 - die Verdampfung von in der Regel zuvor gereinigtem und aufbereitetem (Speise-)Wasser 26, wodurch der zum Betrieb der Dampfturbine 27 notwendige Wasserdampf 26 aus dem (Speise-) Wasser 26 erzeugt wird.

Vom Abhitzekessel 8 aus strömt der Dampf 26 über Rohrleitungen/Verrohrung 28 in die (vereinfacht dargestellte mehrteilige) Dampfturbine 27, wo er einen Teil seiner zuvor aufgenommenen Energie als Bewegungsenergie an die Dampfturbine 27 abgibt. An die Dampfturbine 27 ist ein Generator 29 angekoppelt, der mechanische Leistung in elektrische Leistung umwandelt.

Danach strömt der entspannte und abgekühlte Dampf 26 in den Kondensator 30, wo er durch Wärmeübertragung an die Umgebung kondensiert und sich als flüssiges Wasser 26 sammelt.

Über Kondensatpumpen und Vorwärmern (nicht dargestellt) hindurch wird das Wasser 26 in einen Speisewasserbehälter (nicht dargestellt) zwischengespeichert und dann über eine Speisepumpe 31 erneut dem Abhitzekessel 8 zugeführt, womit der Dampfturbinenkreislauf geschlossen ist.

Weiterer integrierter Bestandteil des GuD-Kraftwerks 1 ist ein Tank 12, welcher über den Dampfturbinenkreislauf mit heißem Dampf 26 befüllbar ist.

Hierzu ist dieser kraftwerksimmanente Tank 12 über eine Regelanzapfung 32 - nach dem Hochdruckteil und vor dem Mitteldruckteil (nicht bezeichnet) - der mehrstufigen Dampfturbine 27 an diese gekoppelt - und kann so - in der Betriebsphase des GuD-Kraftwerks 1 - mit heißen Dampf 26 aus dem Dampfturbinenkreislauf gefüllt, diesen - hier mit ca. 98°C - speichern und diesen für ein Vorwärmen von Kraftwerkskomponenten 3, wie hier die Dampfturbine 27 und den Abhitzekessel 8, sowie für ein Vorwärmen der Brennerluft 21 (Medium 4) der Gasturbine 18 bzw. Gasturbinenanlage 15 zur Verfügung stellen.

Dazu ist der Tank 12 über eine Verrohrung 28 unmittelbar mit der Dampfturbine 27 und dem Abhitzekessel 8 verbunden, worüber der in dem Tank 12 gespeicherte heiße Dampf 26 in die Dampfturbine 27 bzw. in den Abhitzekessel 8 eingeblasen wird - und diesen dadurch erwärmen kann.

Weiter ist der Tank 12 über eine Verrohrung 28 und einen - hier - Kreuzstromwärmetauscher 33 mit der Zuführung 20 der Brennerluft 21 der Gasturbinenanlage 15 verbunden, worüber, d.h. über den Kreuzstromwärmetauscher 33, thermische Energie an die Brennerluft 21 abgegeben - und diese dadurch erwärmt werden kann.

Mittels der Leittechnik 10 wird das GuD-Kraftwerk - durch den Leitstandsfahrer 34 von der Leitwarte 35 aus - "gefahren" 11.

Hierzu werden sämtliche in dem GuD-Kraftwerk 1 anfallenden Informationen/Daten, wie beispielsweise Messwerte, Prozess- oder Zustandsdaten, in der Leitwarte 35 angezeigt und dort in einem leittechnischen Rechner 36 - als die Kontroll-/Steuer-/Regeleinheit des GuD-Kraftwerks 1 - nach vorgegebenen Kontroll-/Steuer-/Regelplänen verarbeitet. Betriebszustände einzelner Kraftwerkskomponenten 3 werden so dort angezeigt, ausgewertet, kontrolliert, gesteuert und/oder geregelt 11. Über Steuerorgane, wie Pumpen 31 und/oder Ventile, greift dort der Leitstandsfahrer (Operateur) 34 in den Betriebsablauf des GuD-Kraftwerks 1 ein, wodurch dieses damit "gefahren" wird 11.

Ist das GuD-Kraftwerk 1 - vom Lastverteiler angefordert - nicht "gefordert", deshalb heruntergefahren und - bei einer Stillstandszeit von beispielsweise größer 60 Stunden - abgekühlt, ist - bei Wiederanforderung des GuD-Kraftwerks 1 bzw. bei einem (Wieder-)Hochfahren des GuD-Kraftwerks 1 - ein Kaltstart des GuD-Kraftwerks 1 notwendig.

Um die Kaltstartphase zu verkürzen, wird - über die Leittechnik 10 gesteuert - die Anlage, d.h. die Dampfturbine 27, der Abhitzekessel 8 und die Brennerluft 21, vorgewärmt.
Dazu gibt der - während des vorherigen Betriebes des GuD-Kraftwerks 1 - mit heißem Dampf 26 gefüllte Tank 12 über seine Verrohrung 28 seinen heißen Dampf 26 (bzw. thermische Energie) an die Dampfturbine 27, den Abhitzekessel 8 und (indirekt über den Kreuzstromwärmetauscher 33) an die Brennerluft 21 ab, wodurch diese erwärmt werden.

Sind die erwärmten Komponenten 3 bzw. die Dampfturbine 27, der Abhitzekessel 8 und/oder die Brennerluft 21 (Medium 4) ausreichend erwärmt, wird die Dampfturbine 27 angestoßen und dann - auf ihren Betriebspunkt/Volllast - hochgezogen.

Sobald das GuD-Kraftwerk 1 dann wieder unter Volllast fährt, kann der entleerte bzw. teilentleerte Tank 12 - über die Regelanzapfung 32 an dem Dampfturbinenhochdruckteil (wieder) gefüllt werden.

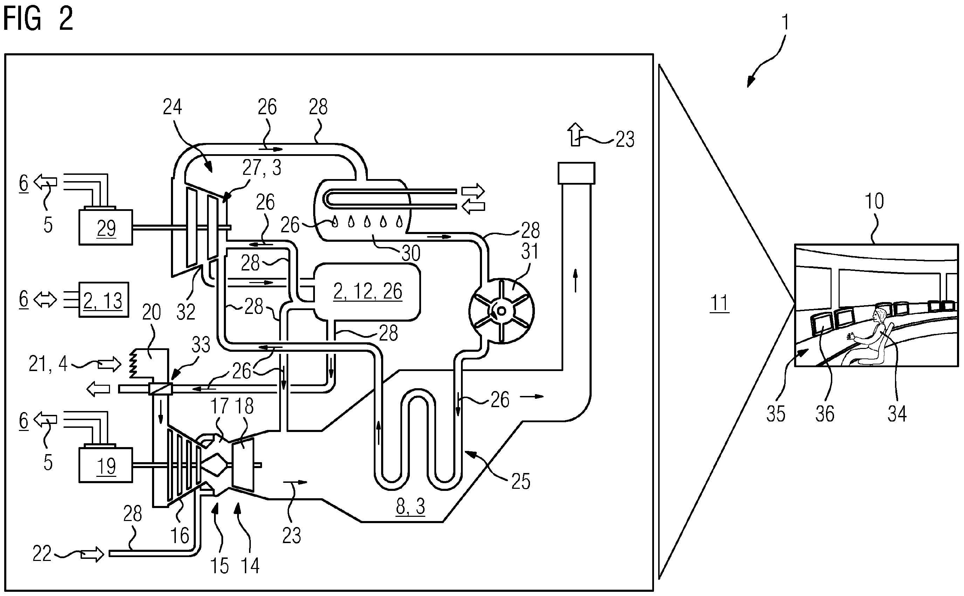

Fig. 2 zeigt das GuD-Kraftwerk 1 aus Fig. 1 weiter ergänzt um einen (auch alleine alternativ zum Tank 12 möglich) Akku 13 (chemischen Speicher). Auch dieser wird über die Leittechnik 10 des GuD-Kraftwerks 1 gesteuert und trägt ebenfalls dazu bei, das Hochfahren des GuD-Kraftwerks 1 zu optimieren und/oder zu verkürzen.

Dieser - mittels elektrischer Energie aus dem elektrischen Energieverteilungsnetz 6 ladbare und auch (umgekehrt) in das elektrische Energieverteilungsnetz 6 hinein entladbare - Akku 13 bietet zunächst (auch unabhängig vom Betriebszustand des GuD-Kraftwerks 1) positive (Entladung ins elektrische Energieverteilungsnetz 6) und negative (Ladung durch das elektrische Energieverteilungsnetz 6) Regelenergie.

Ist der Akku 13 - hier bei Zeiten günstiger Energie des elektrischen Energieverteilungsnetzes 6 - geladen, so wird über ihn das GuD-Kraftwerk 1 (ergänzend oder alternativ zu der Vorwärmung durch den Tank 12) aus dem Stillstand - bzw. aus einem längeren Stillstand über den Kaltstart (Schwarzstart) - an-/hochgefahren und - kann entsprechend der Beladungskapazität des Akkus 13 und dessen elektrischer Energieabgabe an/in das elektrische Energieverteilungsnetz 6 direkt am elektrischen Energieverteilungsnetz 6 sein (Vermarktung), während es, d.h. das GuD-Kraftwerk 1, noch an-/hochgefahren wird.

Die Beladung des Akkus 13 hat dabei keinerlei negativen Einfluss auf den Wirkungsgrad des GuD-Kraftwerks 1.

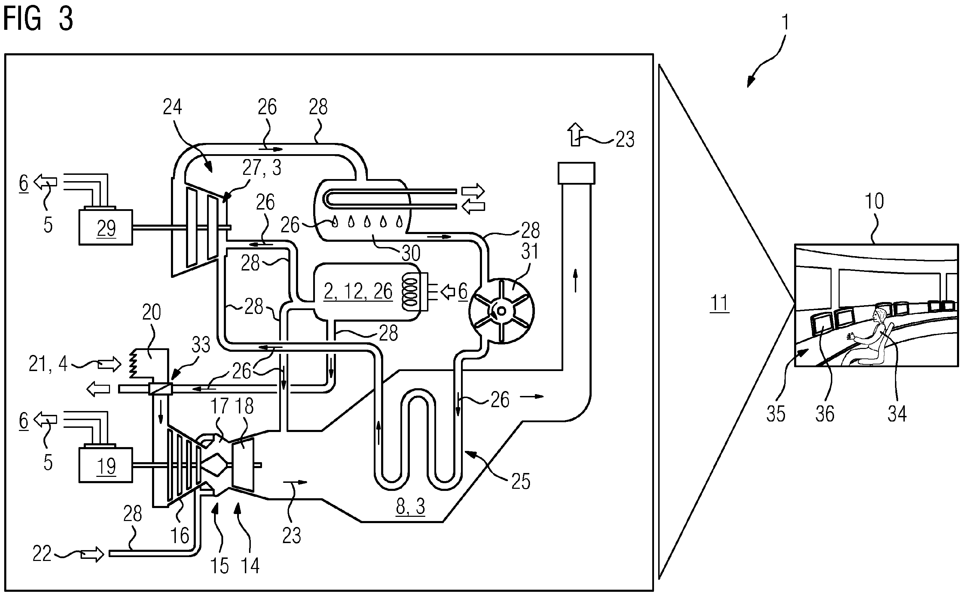

Fig. 3 zeigt das GuD-Kraftwerk 1 aus Fig.1, bei dem anstelle des Tanks 12 ein - ansonsten zum Tank 12 funktionsgleichen - (für die Vorwärmung und Hochfahrzeitverkürzung/-optimierung) elektrisch beheizbarer Kessel 12 für die Vorwärmung zur Verkürzung/Optimierung des Hochfahrens/der Kaltstartphase verwendet wird.

Dieser - mittels elektrischer Energie aus dem elektrischen Energieverteilungsnetz 6 betreibbare/beheizbare - Kessel 12 bietet neben der Möglichkeit, den Dampf 26 für die Vorwärmung (selbst) zu erzeugen und zu speichern (sowie auch für die Vorwärmung der Dampfturbine 27, des Abhitzekessels 8 und der Brennerluft 21 zur Verfügung zu stellen), auch die Option, negative Regelenergie anbieten zu können.

So kann hier - durch Abnahme von negativer Regelenergie aus dem elektrischen Energieverteilungsnetz 6 - der elektrische Kessel 12 befüllt, dort heißer Dampf 26 erzeugt und gespeichert werden - auch ohne dass das GuD-Kraftwerk 1 im Betrieb ist.

Wird hier ein, wie nach Fig. 2 beschriebener, Akku 13 zusätzlich verwendet (nicht dargestellt), so kann dieser Akku 13 auch den elektrischen Kessel 12 betreiben.

### Bezugszeichenliste

- 1: thermisches Kraftwerk, Dampfkraftwerk, Gaskraftwerk, GuD-Kraftwerk
- 2: (zusätzlicher, kraftwerksimmanenter) Energiespeicher, elektrischer, thermischer, chemischer, mechanischer Energiespeicher, erster/zweiter (zusätzlicher, kraftwerksimmanenter) Energiespeicher
- 3: Komponente, Komponenten
- 4: Medium, Medien
- 5: Einspeisung
- 6: (elektrisches) Energieverteilungsnetz
- 8: Kessel, Abhitzekessel
- 10: Leittechnik

- 11: Steuerung, Regelung, Kontrolle, Fahren der Anlage
- 12: Tank, Drucktank, Kessel, Dampfkessel, Elektrodenkessel, Heizkessel
- 13: Akku
- 14: Gasturbinenteil
- 15: Gasturbinenanlage
- 16: Verdichter
- 17: Brennkammer
- 18: Gasturbine
- 19: Generator
- 20: Zuführung

- 21: Frischluft, Brennerluft
- 22: Brennstoff
- 23: heiße Abgase, Rauchgase
- 24: Dampfturbinenteil
- 25: Wärmetauscher
- 26: Speisewasser, Wasserdampf, (kond.) Wasser, Prozessdampf
- 27: Dampfturbine
- 28: Verrohrung, Rohrleitung(-en)
- 29: Generator
- 30: Kondensator

- 31: (Speise-)Pumpe
- 32: Regelanzapfung
- 33: (Kreuzstrom-)Wärmetauscher
- 34: Leitstandsfahrer, Operateur
- 35: Leitwarte
- 36: leittechnischer Zentralrechner

## Patentansprüche

1. Thermisches Kraftwerk (1) mit einem kraftwerksimmanenten thermischen Energiespeicher (2), welcher eingerichtet ist, um bei einem Hochfahren des thermischen Kraftwerks (1) Energie zu einem Erwärmen von Komponenten (3) und/oder Medien (4) des thermischen Kraftwerks (1) zu liefern, **gekennzeichnet, durch** einen zusätzlichen, kraftwerksimmanenten elektrischen, chemischen oder mechanischen Energiespeicher (2), welcher eingerichtet ist, um bei einem Hochfahren des thermischen Kraftwerks (1) Energie zur Einspeisung (5) in ein elektrisches Energieverteilungsnetz (6) zu liefern.

2. Thermisches Kraftwerk (1) nach Anspruch 1,
wobei der kraftwerksimmanente thermische Energiespeicher (2) ein Tank (12), insbesondere ein Drucktank (12), oder ein Kessel (12), insbesondere ein Dampf-, Elektroden- oder Heizkessel (12), ist.

3. Thermisches Kraftwerk (1) nach Anspruch 1 oder Anspruch 2,
wobei der zusätzliche kraftwerksimmanente elektrische, chemische oder mechanische Energiespeicher (2) ein Akku (13) ist.

4. Thermisches Kraftwerk (1) nach einem der voranstehenden Ansprüche,
wobei beide kraftwerksimmanente Energiespeicher (2) in eine Leittechnik (10) des thermischen Kraftwerks (1) integriert sind und/oder über die Leittechnik (10) des thermischen Kraftwerks (1) steuer-/regel-/fahrbar (11) sind und/oder dass beide kraftwerksimmanente Energiespeicher (2) räumlich in das thermische Kraftwerk (1) integriert sind.

5. Thermisches Kraftwerk (1) nach einem der voranstehenden Ansprüche,
wobei das thermische Kraftwerk (1) ein Dampfturbinen- oder Gas-und-Dampfturbinenkraftwerk (GuD-Kraftwerk) ist.

6. Verfahren zum Betreiben eines thermischen Kraftwerks (1), bei dem
bei einem Hochfahren des thermischen Kraftwerks (1)
- ein kraftwerksimmanenter elektrischer, chemischer oder mechanischer Energiespeicher (2) des thermischen Kraftwerks (1) Energie liefert, welche bei dem Hochfahren des thermischen Kraftwerks (1) in ein elektrisches Energieverteilungsnetz (6) eingespeist (5) wird, und
ein kraftwerksimmanenter thermischer Energiespeicher (2) des thermischen Kraftwerks (1) Energie liefert, mit welcher Komponenten (3) und/oder Medien (4) des thermischen Kraftwerks (1), insbesondere eine Turbine (27), ein Kessel (8) und/oder ein Prozessgas (21) des thermischen Kraftwerks (1), bei dem Hochfahren des thermischen Kraftwerks (1) erwärmt werden.

7. Verfahren zum Betreiben eines thermischen Kraftwerks (1) nach Anspruch 6,
bei dem
das Hochfahren ein Kaltstart oder ein Schwarzstart ist.

8. Verfahren zum Betreiben eines thermischen Kraftwerks (1) nach Anspruch 6 oder Anspruch 7,
bei dem
der kraftwerksimmanente thermische Energiespeicher (2) während eines Betriebs des thermischen Kraftwerks (1) mit Prozessdampf (26) des thermischen Kraftwerks (1) gefüllt wird.

9. Verfahren zum Betreiben eines thermischen Kraftwerks (1) nach einem der voranstehenden Ansprüche 6 bis 8,
bei dem
der kraftwerksimmanente elektrische oder chemische oder mechanische Energiespeicher (2) bei einem Überschuss an elektrischer Energie in einem Energieverteilungsnetz (6) mittels der Energie aus dem Energieverteilungsnetz (6) geladen wird.

## Claims

1. Thermal power plant (1), with a thermal energy storage device (2) that is intrinsically in the power plant and is designed to supply energy during starting up of the thermal power plant (1) for heating components (3) and/or media (4) of the thermal power plant (1), **characterized by** an additional electrical, chemical or mechanical energy storage device (2) that is intrinsically in the power plant and is designed to supply energy during starting up of the thermal power plant (1) for feeding (5) into an electrical energy distribution network (6).

2. Thermal power plant (1) according to Claim 1, wherein the thermal storage device (2) that is intrinsically in the power plant is a tank (12), in particular a pressurized tank (12), or a boiler (12), in particular a steam, electrode or heating boiler (12).

3. Thermal power plant (1) according to Claim 1 or Claim 2, wherein the additional electrical, chemical or mechanical energy storage device (2) that is intrinsically in the power plant is a rechargeable battery (13).

4. Thermal power plant (1) according to one of the preceding claims, wherein both energy storage devices (2) that are intrinsically in the power plant are integrated in a control and protection system (10) of the thermal power plant (1) and/or are controllable/operable (11) by the control and protection system (10) of the thermal power plant (1) and/or wherein both energy storage devices (2) that are intrinsically in the power plant are integrated spatially in the thermal power plant (1).

5. Thermal power plant (1) according to one of the preceding claims, wherein the thermal power plant (1) is a steam-turbine or gas-and-steam turbine power plant (combined cycle power plant).

6. Method for operating a thermal power plant (1), in which, during starting up of the thermal power plant (1),
- an electrical, chemical or mechanical energy storage device (2) of the thermal power plant (1) that is intrinsically in the power plant supplies energy, which is fed (5) into an electrical energy distribution network (6) during the starting up of the thermal power plant (1), and
a thermal energy storage device (2) of the thermal power plant (1) that is intrinsically in the power plant supplies energy with which components (3) and/or media (4) of the thermal power plant (1), in particular a turbine (27), a boiler (8) and/or a process gas (21) of the thermal power plant (1), are heated during the starting up of the thermal power plant (1).

7. Method for operating a thermal power plant (1) according to Claim 6,
in which
the starting up is a cold start or a black start.

8. Method for operating a thermal power plant (1) according to Claim 6 or Claim 7,
in which
the thermal energy storage device (2) that is intrinsically in the power plant is filled with process steam (26) of the thermal power plant (1) during operation of the thermal power plant (1).

9. Method for operating a thermal power plant (1) according to one of the preceding Claims 6 to 8,
in which
the electrical or chemical or mechanical energy storage device (2) that is intrinsically in the power plant is charged by means of the energy from an energy distribution network (6) when there is a surplus of electrical energy in the energy distribution network (6).

## Revendications

1. Centrale (1) thermique, comprenant un accumulateur (2) d'énergie thermique immanent à la centrale, qui est conçu, lors d'un démarrage de la centrale (1) thermique, pour fournir de l'énergie pour réchauffer des composants (3) et/ou des fluides (4) de la centrale (1) thermique, **caractérisée par** un accumulateur (2) d'énergie supplémentaire, électrique, chimique ou mécanique immanent à la centrale, qui est conçu pour fournir, lors d'un démarrage de la centrale (1) thermique, de l'énergie pour l'injection (5) dans un réseau (6) de distribution d'énergie électrique.

2. Centrale (1) thermique suivant la revendication 1,
dans laquelle
l'accumulateur (2) d'énergie thermique immanent à la centrale est un réservoir (12), notamment un réservoir (12) tenant la pression, ou une chaudière (12), notamment une chaudière (12) à vapeur, à électrodes ou de chauffage.

3. Centrale (1) thermique suivant la revendication 1 ou la revendication 2,
dans laquelle
l'accumulateur (2) d'énergie supplémentaire électrique, chimique ou mécanique immanent à la centrale est un accumulateur (13) électrochimique.

4. Centrale (1) thermique suivant l'une des revendications précédentes,
dans laquelle
les deux accumulateurs (2) d'énergie immanents à la centrale sont intégrés à une technique (10) de conduite de la centrale (1) thermique et/ou peuvent être commandés/réglés/conduits (11) par la technique (10) de conduite de la centrale (1) thermique et/ou en ce que les deux accumulateurs (2) immanents à la centrale sont intégrés dans l'espace à la centrale (1) thermique.

5. Centrale (1) thermique suivant l'une des revendications précédentes,
dans laquelle
la centrale (1) thermique est une centrale à turbine à vapeur ou une centrale à turbine à gaz et à turbine à vapeur (centrale à cycles combinés).

6. Procédé pour faire fonctionner une centrale (1) thermique,
dans lequel,
lors d'un démarrage de la centrale (1) thermique
- un accumulateur (2) d'énergie immanent à la centrale, électrique, chimique ou mécanique de la centrale (1) thermique, fournit de l'énergie, qui, lors du démarrage de la centrale (1) thermique, est injectée (5) dans un réseau (6) de distribution d'énergie électrique, et
un accumulateur (2) d'énergie thermique immanent à la centrale de la centrale (1) thermique fournit de l'énergie, par laquelle des composants (3) et/ou des fluides (4) de la centrale (1) thermique, notamment une turbine (27), une chaudière (8) et/ou un gaz (21) de processus de la centrale (1) thermique sont réchauffés lors du démarrage de la centrale (1) thermique.

7. Procédé pour faire fonctionner une centrale (1) thermique suivant la revendication 6,
dans lequel
le démarrage est un démarrage à froid ou un démarrage autonome.

8. Procédé pour faire fonctionner une centrale (1) thermique suivant la revendication 6 ou la revendication 7,
dans lequel
on rempli l'accumulateur (2) d'énergie thermique immanent à la centrale pendant un fonctionnement de la centrale (1) thermique de vapeur (26) de processus de la centrale (1) thermique.

9. Procédé pour faire fonctionner une centrale (1) thermique suivant l'une des revendications 6 à 8 précédentes,
dans lequel
on charge l'accumulateur (2) d'énergie immanent à la centrale électrique ou chimique ou mécanique lors d'un excès d'énergie électrique dans un réseau (6) de distribution d'énergie, au moyen de l'énergie du réseau (6) de distribution d'énergie.
